**Europäisches Patentamt**

**European Patent Office**

**Office européen des brevets**

(11) Veröffentlichungsnummer : **0 352 404 B1**

# (12) EUROPÄISCHE PATENTSCHRIFT

(45) Veröffentlichungstag der Patentschrift :
**01.04.92 Patentblatt 92/14**

(21) Anmeldenummer : **89106388.5**

(22) Anmeldetag : **11.04.89**

(51) Int. Cl.⁵ : **B01D 29/13,** B01D 29/15,
B01D 29/92

(54) **Filterelement.**

(30) Priorität : **04.06.88 DE 3819137**

(43) Veröffentlichungstag der Anmeldung :
**31.01.90 Patentblatt 90/05**

(45) Bekanntmachung des Hinweises auf die
Patenterteilung :
**01.04.92 Patentblatt 92/14**

(84) Benannte Vertragsstaaten :
**DE ES GB NL**

(56) Entgegenhaltungen :
**DE-A- 2 039 553**
**US-A- 3 759 459**
**US-A- 4 411 788**
**US-A- 4 505 816**

(73) Patentinhaber : **Krupp Koppers GmbH**
**Altendorfer Strasse 120**
**W-4300 Essen 1 (DE)**

(72) Erfinder : **Giese, Manfred**
**Velberter Strasse 52**
**W-4300 Essen 16 (DE)**

## Beschreibung

Die Erfindung betrifft ein Filterelement zum Einbau in einen Druckfilter, bestehend aus einem mit Öffnungen versehenen, rohrförmigen Stützkörper, wobei über den Stützkörper ein Filtergewebe gespannt und innerhalb desselben ein Rohr für den Flüssigkeitsabzug koaxial angeordnet ist.

Ein Filterelement der vorstehend genannten Art ist aus der DE-A-20 39 553 bekannt. Beim Betrieb eines derartigen Filterelementes wird die zu filtrierende Flüssigkeit unter Druckanwendung durch das Filtergewebe von außen nach innen hindurchgepreßt und gelangt über die im Stützkörper vorhandenen Öffnungen in das innerhalb des Stützkörpers angeordnete Rohr, durch das die Flüssigkeit abgezogen wird. Der aus der Flüssigkeit abgeschiedene Feststoff lagert sich währenddessen auf der äußeren Oberfläche des Filtergewebes ab und kann, sobald die gewünschte Dicke des Filterkuchens erreicht ist, mittels eines Druckstoßes entgegen der Filtratfließrichtung vom Filtergewebe abgelöst werden. Hierbei ist ein plötzliches und starkes Aufblähen des Filtergewebes erforderlich, damit der gesamte Filterkuchen abgeworfen werden kann.

Aus der EP-A-0 066 921 ist ein Filterelement bekannt, bei dem der Stützkörper aus einem Bündel von Rohren mit kreisförmigem Querschnitt besteht, die um ein Zentralrohr für den Flüssigkeitsabzug angeordnet sind.

In der US-A-4 604 201 wird ferner ein Filterelement beschrieben, bei dem an der Außenseite des Zentralrohres Distanzstücke angebracht sind, an denen in Längsrichtung verlaufende Rippen befestigt sind. Das Filtergewebe wird hierbei über diese Rippen gespannt, die in diesem Falle als Stützkörper dienen.

Diese bekannten Konstruktionen sind jedoch nicht frei von Nachteilen. Entweder bereitet bei ihnen der vollständige Abwurf des Filterkuchens Schwierigkeiten oder sie sind in ihrer Form aufwendig, wobei insbesondere die kappen am oberen und unteren Ende fertigungsmäßig sehr kompliziert sind. Außerdem wird bei einigen Konstruktionen das Filtergewebe während des Filtervorganges nur teilweise durch den Stützkörper abgestützt, während es in weiten Bereichen frei durchhängt. Dadurch wird das Filtergewebe stark geknickt, was natürlich seine Haltbarkeit beeinträchtigt. Dabei baut sich in diesem Falle während des Filtervorganges ein Filterkuchen mit erheblichen Dickeunterschieden auf, der während der Nachbehandlung zu Rissen neigt. Hierdurch wird dieser Prozeßschritt negativ beeinflußt.

Der Erfindung liegt deshalb die Aufgabe zugrunde, ein Filterelement zu schaffen, das die vorstehend beschriebenen Nachteile vermeidet und gleichzeitig folgende Eigenschaften aufweist:

1. Einfacher und kostengünstiger Aufbau,
2. geringe Beanspruchung des Filtergewebes und
3. Erzielung einer gleichmäßigen Dicke des Filterkuchens.

Diese Aufgabe wird gelöst durch ein Filterelement der eingangs genannten Art, das erfindungsgemäß dadurch gekennzeichnet ist, daß an der Außenseite des Stützkörpers in Längsrichtung verlaufende Nocken angeordnet sind, deren Anzahl und Dicke so bemessen ist, daß ein weitgehendes Aufliegen des Filtergewebes auf dem Stützkörper während des Filtervorganges gewährleistet ist.

Das heißt, beim erfindungsgemäßen Filterelement besteht der Stützkörper aus einem einzigen Rohr, an dessen Außenseite die in Längsrichtung verlaufenden Nocken durch Schweißen, Löten, kleben oder dergleichen angebracht sind. Die Nocken können dabei aus Stäben mit rundem oder halbrundem Querschnitt bestehen, deren Dicke so bemessen ist, daß das Filtergewebe während des Filtervorganges weitgehend auf dem Stützkörper aufliegt und so ein freies Durchhängen desselben vermieden wird. Dies wird normalerweise erreicht, wenn in Abhängigkeit vom Durchmesser des als Stützkörper verwendeten Rohres und der Anzahl der verwendeten Nocken die Dicke der Nocken im Bereich zwischen 1 und 15 mm liegt.

Weitere Einzelheiten des erfindungsgemäßen Filterelementes sollen nachfolgend an Hand der Abbildungen erläutert werden, die ein Ausführungsbeispiel betreffen. Hierbei zeigen:

Fig. 1 einen Längsschnitt durch das Filterelement und

Fig. 2 einen Querschnitt durch das Filterelement.

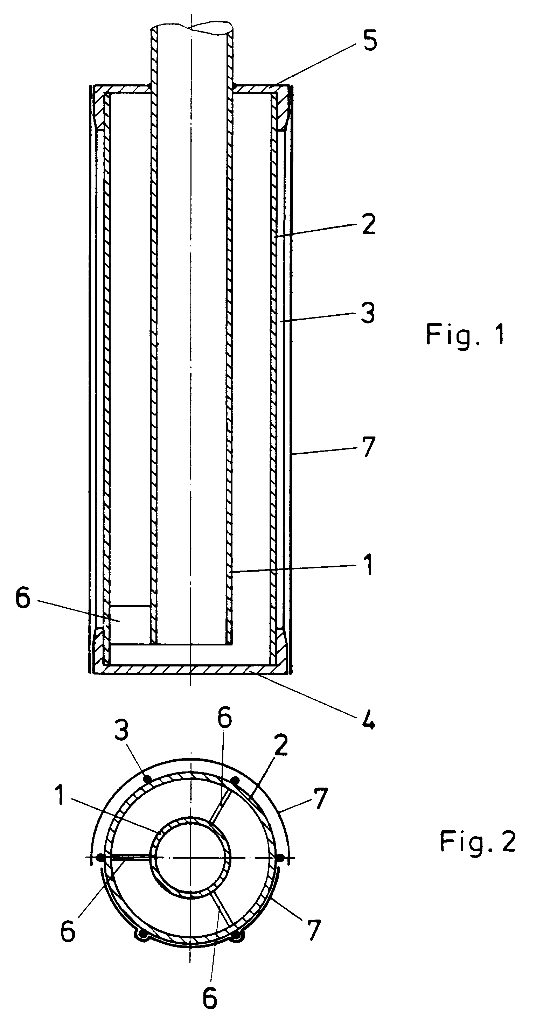

Bei dem in Fig. 1 dargestellten Filterelement ist das Rohr für den Flüssigkeitsabzug mit 1 bezeichnet. Dieses ist vom Stützkörper 2 umgeben, der ebenfalls in Form eines Rohres ausgebildet und koaxial zum Rohr 1 angeordnet ist. Der Stützkörper 2 weist dabei Öffnungen auf, die auf der Abbildung nicht zu erkennen sind und die eine runde oder eckige Form aufweisen können. An der Außenseite des Stützkörpers 2 sind die Nocken 3 angebracht, die in Längsrichtung, d.h. parallel zur Rohrachse, verlaufen und die über den gesamten Umfang des Stützkörpers 2 gleichmäßig verteilt sind. Das untere Ende des Stützkörpers 2 ist mit der dicht schließenden Kappe 4 und das obere Ende mit der dicht schließenden Kappe 5 verschlossen. Das Rohr 1 wird dabei durch die obere Kappe 5 hindurchgeführt und ist mit dieser dicht verbunden. Der Steg 6 dient der Arretierung des Rohres 1 innerhalb des Stützkörpers 2. Das Filtergewebe 7, das vorzugsweise in Form eines Schlauches ausgebildet sein kann, wird von außen über den Stützkörper 2 gespannt und liegt auf diesem weitgehend auf. Das Filtergewebe 7 kann dabei durch in der Abbildung nicht dargestellte Schlauchschellen oder ähnliche Befestigungsmittel an den Kappen 4 und 5 dichtschließend befestigt werden.

Die Fig. 2 zeigt einen Querschnitt durch das Filterelement, wobei die Bezugszeichen selbstverständlich die gleiche Bedeutung wie in Fig. 1 haben. In der unteren Hälfte der Abbildung ist hierbei die Lage des Filtergewebes 7 während des Filtervorganges dargestellt. Man erkennt, daß in diesem Falle das Filtergewebe 7 infolge des in Filtratfließrichtung einwirkenden Druckes glatt auf der äußeren Oberfläche des Stützkörpers 2 aufliegt. Das Filterkuchen kann sich deshalb auf dem Filtergewebe 7 in gleichmäßiger Dicke ablagern, ohne daß Spannungsrisse im Filterkuchen infolge unterschiedlicher Dicke entstehen können.

In der oberen Hälfte der Abbildung in Fig. 2 ist demgegenüber die Lage des Filtergewebes 7 dargestellt, wenn zum Abwurf des Filterkuchens ein Druckstoß mit Luft und/oder Gas gegen die Filtratfließrichtung durch das Filterelement geblasen wird. Das Filtergewebe 7 ist dann so aufgeblasen, daß zwischen dem Stützkörper 2 und dem Filtergewebe 7 ein Hohlraum entsteht, dessen Breite in etwa der Dicke der Nocken 3 entspricht. Durch diese Vergrößerung des Durchmessers des Filtergewebes 7 wird der Filterkuchen aufgebrochen und vom Filterelement abgeworfen.

Die Abbildung in Fig. 2 zeigt ferner, daß im vorliegenden Ausführungsbeispiel insgesamt sechs Nocken 3 vorgesehen sind, die gleichmäßig über den gesamten Umfang verteilt an der Außenseite des Stützkörpers 2 angebracht sind. Ferner beträgt die Zahl der Stege 6, durch die das Rohr 1 für den Flüssigkeitsabzug koaxial zum Stützkörper 2 arretiert wird, in diesem Falle drei. Das erfindungsgemäße Filterelement kann hierbei ganz oder teilweise aus Kunststoff gefertigt werden. Entsprechend den Anforderungen der Praxis ist es aber auch möglich, daß das Filterelement oder einzelne Teile hiervon aus einem anderen Material, wie z.B. Edelstahl, besteht.

Das erfindungsgemäße Filterelement kann im gesamten Bereich der Fest-Flüssigtrennung eingesetzt werden. Besonders geeignet ist es für den Einsatz in solchen Fällen, in denen der abgeschiedene Feststoff nachbehandelt oder getrocknet werden muß.

## Patentansprüche

1. Filterelement zum Einbau in einen Druckfilter, bestehend aus einem mit Öffnungen versehenen, rohrförmigen Stützkörper, wobei über den Stützkörper ein Filtergewebe gespannt und innerhalb desselben ein Rohr für den Flüssigkeitsabzug koaxial angeordnet ist, dadurch gekennzeichnet, daß an der Außenseite des Stützkörpers (2) in Längsrichtung verlaufende Nocken (3) angeordnet sind, deren Anzahl und Dicke so bemessen ist, daß ein weitgehendes Aufliegen des Filtergewebes (7) auf dem Stützkörper (2) während des Filtervorganges gewährleistet ist.

2. Filterelement nach Anspruch 1, dadurch gekennzeichnet, daß die Nocken (3) eine Dicke zwischen 1 und 15 mm aufweisen.

3. Filterelement nach den Ansprüchen 1 und 2, dadurch gekennzeichnet, daß die Nocken (3) über den gesamten Umfang des Stützkörpers (2) gleichmäßig verteilt angeordnet sind.

4. Filterelement nach den Ansprüchen 1 bis 3, dadurch gekennzeichnet, daß das Rohr (1) für den Flüssigkeitsabzug durch die Stege (6) koaxial zum Stützkörper (2) arretiert ist.

5. Filterelement nach den Ansprüchen 1 bis 4, dadurch gekennzeichnet, daß das Rohr (1) für den Flüssigkeitsabzug, der Stützkörper (2), die Nocken (3), die Kappen (4) und (5) sowie die Stege (6) aus Kunststoff gefertigt werden.

## Claims

1. Filter element for installation in a pressure filter, consisting of a tubular supporting body provided with orifices, a filter fabric being stretched over the supporting body, and a tube being arranged coaxially within this for the draw-off of liquid, characterised in that arranged on the outside of the supporting body (2) are longitudinally extending bosses (3), the number and thickness of which are such as to guarantee that the filter fabric (7) essentially rests on the supporting body (2) during the filter operation.

2. Filter element according to Claim 1, characterised in that the bosses (3) have a thickness of between 1 and 15 mm.

3. Filter element according to Claims 1 and 2, characterised in that the bosses (3) are arranged distributed uniformly over the entire circumference of the supporting body (2).

4. Filter element according to Claims 1 to 3, characterised in that the tube (1) for the draw-off of liquid is locked coaxially with the supporting body (2) by means of the webs (6).

5. Filter element according to Claims 1 to 4, characterised in that the tube (1) for the draw-off of liquid, the supporting body (2), the bosses (3), the caps (4) and (5) and the webs (6) are produced from plastic.

**Revendications**

1. Elément filtrant à monter dans un filtre-presse, se composant d'un corps de base tubulaire pourvu d'ouvertures, dans lequel un tissu filtrant est tendu sur le corps de base et où un tube pour l'évacuation du liquide est disposé coaxialement à l'intérieur de ce corps de base, caractérisé en ce que sur la face extérieure du corps de base (2) sont disposées des nervures (3) courant en direction longitudinale, dont le nombre et l'épaisseur sont déterminés de telle façon que soit garanti un large appui du tissu filtrant (7) sur le corps de base (2) pendant l'opération de filtrage.

2. Elément filtrant suivant la revendication 1, caractérisé en ce que les nervures (3) présentent une épaisseur comprise entre 1 et 15 mm.

3. Elément filtrant suivant la revendications 1 et 2, caractérisé en ce que les nervures (3) sont disposées avec une répartition uniforme sur toute la périphérie du corps de base (2).

4. Elément filtrant suivant la revendications 1 à 3, caractérisé en ce que le tube (1) pur l'évacuation du liquide est calé coaxialement au corps de base (2) par les ailettes (6).

5. Elément filtrant suivant la revendications 1 à 4, caractérisé en ce que le tube (1) pur l'évacuation du liquide, le corps de base (2), les nervures (3), les capuchons (4) et (5) ainsi que les ailettes (6) sont fabriqués en matière plastique.

Fig. 1

Fig. 2